# EUROPÄISCHE PATENTSCHRIFT

(11) **EP 1 238 184 B1**
(45) Veröffentlichungstag und Bekanntmachung des Hinweises auf die Patenterteilung: **10.11.2004**
(21) Anmeldenummer: 00990716.3
(22) Anmeldetag: 12.12.2000
(51) Int. Cl.: F01D 5/02, F03B 11/06

(54) **Wasserkraftmaschinensatz**
Hydroelectric machine unit
Groupe moteur hydroélectrique

(30) Priorität: 14.12.1999 DE 19960278
(43) Veröffentlichungstag der Anmeldung: 11.09.2002
(73) Patentinhaber: Voith Siemens Hydro Power Generation GmbH & Co. KG, 89522 Heidenheim (DE)
(72) Erfinder: UTECHT, Manfred, D-14193 Berlin (DE)
(74) Vertreter: Koch, Annegret Christa
(86) Internationale Anmeldenummer: PCT/EP2000/012550
(87) Internationale Veröffentlichungsnummer: WO 2001/046563

(56) Entgegenhaltungen:
- DE-A- 19 505 695
- DE-A- 19 547 171
- DE-C- 361 081
- GB-A- 786 439
- US-A- 2 625 790
- US-A- 2 744 395

## Beschreibung

Die Erfindung bezieht sich auf einen Maschinensatz, insbesondere auf einen vertikalen Wasserkraftmaschinensatz, bei dem die Turbinenwelle einer Turbine in Richtung einer Längsachse mit der Generatorwelle eines Generators verbunden ist.

Aus der DE-OS 24 40 549 ist ein derartiger vertikaler Maschinensatz, insbesondere Wasserkraftmaschinensatz, bekannt. Der Wasserkraftmaschinensatz erstreckt sich entlang einer vertikal angeordneten und eine Längsachse bildenden Welle. Der Maschinensatz umfasst eine Turbine und einen Generator, die über die Welle miteinander verbunden sind. Die Welle ist aus der Turbinenwelle, der Generatorwelle und einer zwischen diesen beiden Wellenteilabschnitten angeordneten Zwischenwelle gebildet. Die Zwischenwelle ist mit der Turbinenwelle und der Generatorwelle jeweils mit Hilfe einer Flanschverbindung starr verbunden.

Bei dem Wasserkraftmaschinensatz entstehen infolge von Strömungsunregelmäßigkeiten im Wasser an der Turbine sehr große hydraulische Wechselkräfte, die axial und insbesondere auch radial zur Turbinenwelle wirken. Die Turbinenwelle ist demnach hydraulischen Radial- und /oder hydraulischen Axialkräften ausgesetzt. Die Kräfte werden über die steife Zwischenwelle auf die Generatorwelle übertragen und führen zu hohen Schwingungsbeanspruchungen des Generators. Um diese Kräfte aufnehmen zu können, ist daher im Generatorbereich die Stützstruktur, die die rotierenden Teile des Maschinensatzes abstützt, besonders steif und groß dimensioniert. Insbesondere gilt dies für ein oberes Führungslager, welches zur radialen Lagerung der Generatorwelle dient. Dieses Radiallager erfährt infolge der auf die Turbine ausgeübten hydraulischen Wechselkräfte sehr hohe Beanspruchungen.

Ansätze zum Ausgleich von Quer- oder Winkellagefehlern zweier miteinander gekuppelten Wellen sind beispielsweise aus den Schriften DE 195 47 171 A1, DE 195 05 695 A1 bekannt. Die Anordnung von in Richtung der Längsachse zueinander beweglichen Wellen bei einer Gasturbine ist in der US 2 625 790 beschrieben.

Der Erfindung liegt die Aufgabe zugrunde, einen Maschinensatz, insbesondere einen vertikalen Wasserkraftmaschinensatz anzugeben, bei dem die Beanspruchung durch die auf die Turbine ausgeübten hydraulischen Wechselkräfte im Vergleich zum bekannten Maschinensatz verringert ist.

Die Aufgabe wird gemäß der Erfindung gelöst durch einen Maschinensatz, insbesondere durch einen vertikalen Wasserkraftmaschinensatz, bei dem die Turbinenwelle einer Turbine in Richtung einer Längsachse mit der Generatorwelle eines Generators verbunden ist, wobei zwischen der Turbinenwelle und der Generatorwelle eine permanent wirksame Kupplung vorgesehen ist, die eine Beweglichkeit der beiden Wellen gegeneinander senkrecht zur Längsachse ermöglicht.

Diese senkrechte Beweglichkeit umfasst eine translatorische, insbesondere Linearbewegung in radialer Richtung und/oder eine sogenannte rotorische oder rotatorische Bewegung senkrecht zur Längsachse, also eine Drehbeweglichkeit um eine Drehachse, die senkrecht zur Längsachse ausgerichtet ist. Die rotorische Beweglichkeit ermöglicht, dass die beiden Wellen mit ihren Wellenlängsachsen einen kleinen Winkel einschließen, also nicht parallel zueinander verlaufen, ohne dass unerwünscht hohe Biegemomente auf die Wellen ausgeübt werden.

Die permanent wirksame Kupplung, also keine nach Art einer Schaltkupplung lösbare Kupplung, lässt insbesondere eine gewisse Verschiebung in radialer Richtung zwischen Turbinenwelle und Generatorwelle zu. Die Größe dieser Verschiebung wird durch die radialen Spiele in Führungslagern bestimmt, die der Kupplung benachbart sind und zur Führung der Turbinenwelle und der Generatorwelle dienen. Die Verschiebung liegt damit bei großen Wasserkraftmaschinensätzen in der Regel etwa in der Größenordnung von bis zu einem Millimeter. Durch die Beweglichkeit radial zur Längsachse werden Ausschläge der Turbinenwelle in radialer Richtung, die von hydraulischen Wechselkräften hervorgerufen sind, nicht unmittelbar auf die Generatorwelle übertragen, wie es bei der bekannten steifen Zwischenwelle zwangsläufig erfolgt. Die in radialer Richtung wirkenden Kräfte werden nicht oder nur kaum auf die Generatorwelle übertragen, so dass deren Beanspruchung im Vergleich zu einem Maschinensatz mit steifer Zwischenwelle deutlich reduziert ist. Dies trägt zu einer Entlastung des Generators sowie der Tragstruktur im Generatorbereich bei. Insbesondere wird ein oberes radiales Führungslager entlastet. Die grundlegende Idee der Anordnung der Kupplung ist darin zu sehen, dass die Generatorwelle von der Turbinenwelle im Hinblick auf hydraulische Wechselkräfte, der die Turbinenwelle ausgesetzt ist, entkoppelt ist.

In einer bevorzugten Ausführung ist die Turbinenwelle im Bereich der Kupplung von einem radialen Führungslager geführt, so dass die wirkenden radialen Kräfte von diesem radialen Führungslager aufgenommen werden. Dieses Führungslager ist dabei entweder unmittelbar an der Turbinenwelle selbst oder an dem Kupplungsteil vorgesehen, welches mit der Turbinenwelle verbunden ist. Das Radiallager begrenzt die Auslenkungen der Turbinenwelle und trägt damit entscheidend zum stabilen Laufverhalten des gesamten Wellenstranges bei.

Vorzugsweise ist die Kupplung als Doppelzahnkupplung mit einem Innenteil und mit einem Außenteil und zwar insbesondere als sogenannte Bogenzahnkupplung ausgeführt. Eine solche Bogenzahnkupplung ist besonders robust und zum Übertragen sowie zur Aufnahme von sehr großen Drehmomenten geeignet, so dass sie den Beanspruchungen eines Wasserkraftmaschinensatzes standhält.

Bevorzugt weist das Außenteil der Doppelzahnkupplung ein mit der Generatorwelle verbundenes erstes oberes Außensegment sowie ein mit der Turbinenwelle verbundenes zweites unteres Außensegment auf. Sowohl die Generatorwelle als auch die Turbinenwelle sind also mit dem Außenteil der Doppelzahnkupplung verbunden. Dies ermöglicht eine einfache konstruktive Ausgestaltung. Die Drehmomente zwischen den beiden Außensegmenten werden über das Innenteil übertragen, welches insbesondere einstückig und hohlzylindrisch ausgebildet ist.

Um die Gewichtskraft der rotierenden Turbinenteile inklusive der Turbinenwelle sowie auch etwaige auf den Turbinenrotor wirkende hydraulische Axialkräfte zu übertragen, sind vorzugsweise die beiden Außensegmente in Längsrichtung über eine Tragstruktur miteinander verbunden. Dies ermöglicht, dass das gesamte Gewicht der rotierenden Teile des Maschinensatzes sowie auch etwaige hydraulische Axialkräfte von einem einzigen axialen Traglager aufgenommen werden. Alternativ zur Anordnung der Tragstruktur ist jeweils ein axiales Traglager für den oberen Generatorbereich und für den unteren Turbinenbereich vorgesehen.

Um ein Übertragen von hydraulischen Radialkräften über die Tragstruktur von der Turbinenwelle auf die Generatorwelle zu vermeiden, weist die Tragstruktur in einer vorteilhaften Ausgestaltung in senkrechter Richtung zur Längsachse eine geringe Steifigkeit, insbesondere eine geringe translatorische und/oder rotatorische Steifigkeit, auf.

Vorzugsweise ist sie hierbei mit dem oberen Außensegment und/oder mit dem unteren Außensegment federnd verbunden, und zwar derart, dass insbesondere eine translatorische und/oder rotatorische Federwirkung in radialer Richtung besteht.

In einer vorteilhaften Weiterbildung ist die Generatorwelle im Bereich der Kupplung von einem mittleren radialen Führungslager geführt, wodurch ein stabiles Laufverhalten des Generatorrotors sichergestellt ist. Zudem werden durch dieses Führungslager radiale Restkräfte aufgenommen, die über die Kupplung von der Turbinenwelle auf die Generatorwelle übertragen werden. Das mittlere radiale Führungslager führt dabei unmittelbar die Generatorwelle oder das obere Außensegment der Kupplung, welches mit der Generatorwelle verbunden ist.
Bevorzugt ist das mittlere Führungslager in einem kombinierten Trag- und Führungslager integriert, welches sowohl eine radiale Führung der Generatorwelle als auch die axiale Abstützung der rotierenden Teile des gesamten Maschinensatzes übernimmt.

In einer vorteilhaften Ausgestaltung weist die Kupplung weiterhin eine Winkelnachgiebigkeit auf, so dass die Übertragung von Biegemomenten von der Turbinenwelle auf die Generatorwelle weitgehend vermieden ist. Dadurch können die Generatorwelle und die Turbinenwelle unter einem kleinen Winkel zueinander ausgerichtet sein, ohne dass auf die beiden Wellen große Biegemomente übertragen werden. Ein solcher Winkelversatz bezüglich der Längsachse entsteht beispielsweise durch eine geringe Schiefstellung der Turbinenwelle infolge statischer hydraulischer Horizontalkräfte am Turbinenrotor.

Ein Ausführungsbeispiel der Erfindung wird im Folgenden anhand der Zeichnung näher erläutert.

Es zeigen jeweils in schematischer Darstellung:
- FIG 1: einen bekannten Maschinensatz mit einer herkömmlichen starren Verbindung zwischen Turbinenwelle und Generatorwelle, und
- FIG 2: eine ausschnittsweise Darstellung eines Maschinensatzes mit einer erfindungsgemäßen Kupplung zwischen Turbinenwelle und Generatorwelle.

In den Figuren sind gleichwirkende Teile mit den gleichen Bezugszeichen versehen.

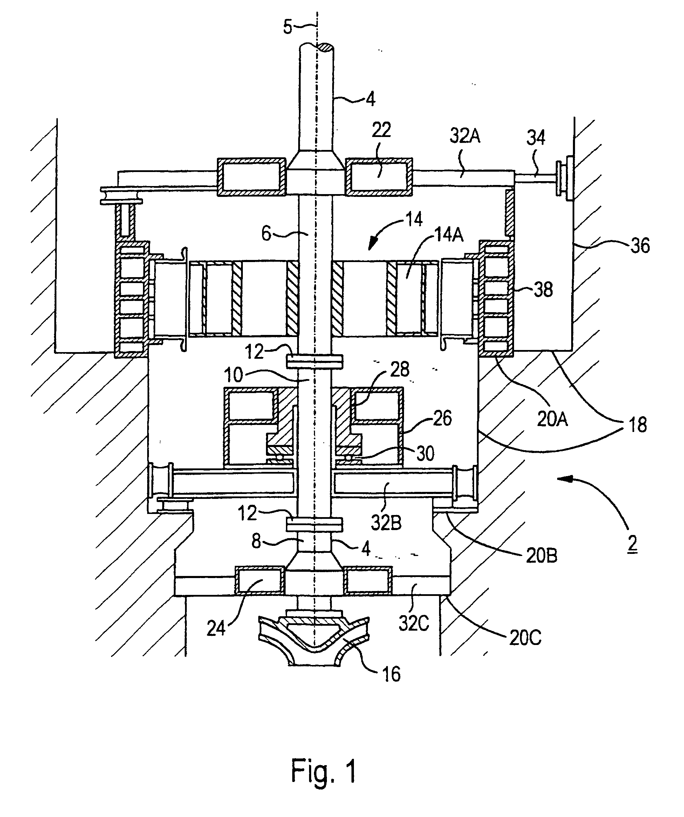

FIG 1 zeigt eine aus dem Stand der Technik bekannte Anordnung eines Maschinensatzes 2 mit einer senkrechten Welle 4, die sich entlang einer Axial- oder Längsachse 5 erstreckt. Die Welle 4 ist dreiteilig ausgebildet und weist eine Generatorwelle 6, eine Turbinenwelle 8 sowie eine zwischen diesen beiden Wellen angeordnete Zwischenwelle 10 auf. Letztere ist mit der Generatorwelle 6 und mit der Turbinenwelle 8 jeweils über eine Flanschverbindung 12 steif verbunden, so dass die Welle 4 insgesamt als eine steife Welle ausgebildet ist. Die Generatorwelle 6 ist zu einem Generator 14 und die Turbinenwelle 8 ist zu einer Turbine 16 gehörig.

Der Maschinensatz 2 ist insbesondere als Maschinensatz für ein Wasserkraftwerk ausgelegt. Dabei wird die Turbine 16 über die Wasserkraft angetrieben und die rotierende Bewegung wird über die starre Welle 4 auf den Generator zur Erzeugung von Strom übertragen. Der vertikal angeordnete Maschinensatz 2 ist in einem aus Beton gebildeten Schacht 18 angeordnet, der durch absatzweise Konstruktion mehrere Fundamente aufweist, nämlich ein oberes Fundament 20A, ein mittleres Fundament 20B sowie ein unteres Fundament 20C.

Die Welle 4 ist dreifach gelagert, und zwar ist die Generatorwelle 6 über ein oberes Führungslager 22, die Turbinenwelle 8 über ein unteres Führungslager 24 und die Zwischenwelle 10 über ein mittleres Lager 26 gelagert. Letzteres ist als kombiniertes Trag- und Führungslager ausgebildet und weist hierzu ein mittleres Führungslager 28 sowie ein Axiallager 30 auf. Über das Axiallager 30 wird das Gewicht der rotierenden Teile des Maschinensatzes 2 aufgenommen. Das aufgenommene Gewicht wird über eine mittlere Tragstruktur 32B auf das mittlere Fundament 20B übertragen.

Die einzelnen Führungslager 22,24,28 sind jeweils zur radialen Führung der rotierenden Teile, insbesondere der Welle 4, vorgesehen. Das obere Führungslager 22 stützt sich über eine obere Tragstruktur 32A über eine Wandverbindung 34 einerseits an der Wand 36 des Schachts 18 in radialer Richtung ab und ist andererseits über ein Gehäuse 38 des Generators 14 am oberen Fundament 20A abgestützt. Das untere Führungslager 24 ist ebenfalls über eine untere Tragstruktur 32C abgestützt.

Bei dem Wasserkraftmaschinensatz 2 treten im Allgemeinen sehr große hydraulische, radiale Wechselkräfte auf. Durch die steife Ausbildung der Welle 4, insbesondere der steifen Verbindung zwischen der Turbinenwelle 8 und der Generatorwelle 6 über die Zwischenwelle 10, werden die radialen Wechselkräfte, die im Bereich der Turbine 16 entstehen, auf die Generatorwelle 6 und somit auf den Generator 14 und insbesondere auf dessen Rotor 14A übertragen. Sie führen zu einer hohen Beanspruchung, insbesondere Schwingungsbeanspruchungen, des Generators 14 sowie vor allem des oberen Führungslagers 22. Der Generator 14 und das obere Führungslager 22 müssen daher für die Aufnahme dieser Kräfte entsprechend ausgebildet sein, um einen zuverlässigen Betrieb des Maschinensatzes 2 zu gewährleisten. Dies wird herkömmlich durch eine sehr steife konstruktive Ausgestaltung zu erreichen versucht.

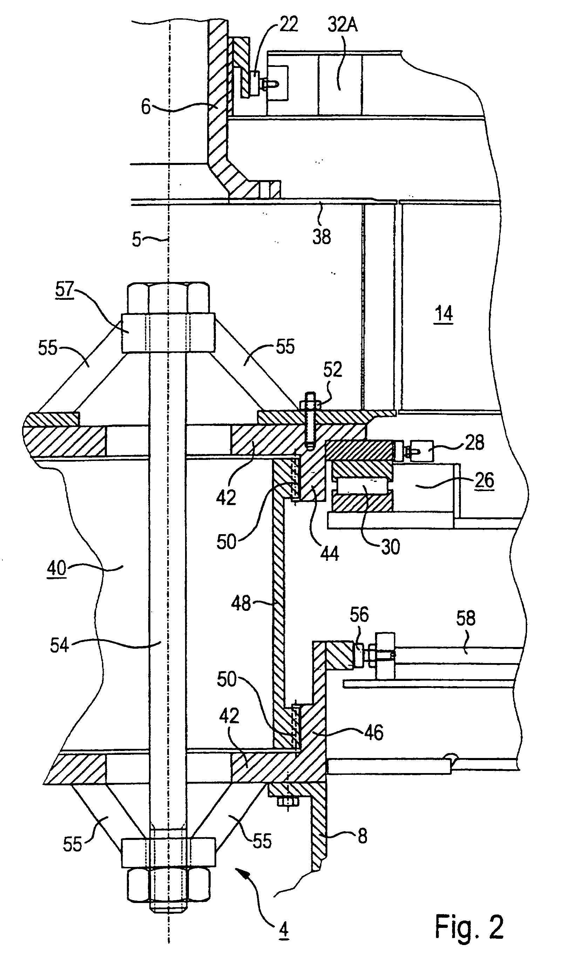

Um ein Übertragen der radialen Wechselkräfte auf die Generatorwelle 6 zu vermeiden oder zumindest deutlich zu reduzieren, ist gemäß FIG 2 vorgesehen, die Generatorwelle 6 über eine Kupplung 40 mit der Turbinenwelle 8 zu verbinden. Die Kupplung 40 ersetzt insbesondere die Zwischenwelle 10 gemäß FIG 1. In FIG 2 ist der Maschinensatz 2 sowie die Kupplung 40 nur ausschnittweise dargestellt, insbesondere ist nur die rechte Seite der Welle 4 dargestellt, die als Hohlwelle ausgebildet ist.

Die Kupplung 40 ist als Doppelzahnkupplung, insbesondere als sogenannte Bogenzahnkupplung, ausgebildet und weist ein zweiteiliges Außenteil 42 mit einem ersten, oberen Außensegment 44 und einem zweiten, unteren Außensegment 46 sowie ein Innenteil 48 auf. Dieses ist hohlzylindrisch ausgebildet und greift mit seinen Endbereichen jeweils über eine Zahnverbindung 50 in das erste Außensegment 44 bzw. in das zweite Außensegment 46 ein. Das zweite Außensegment 46 ist fest mit der Turbinenwelle 8 und das erste Außensegment 44 ist über eine Schraubverbindung 52 mit dem Rotor 14A des Generators 14 (in FIG 2 nicht dargestel It) fest verbunden. Der Rotor 14A wiederum ist mit der Generatorwelle 6 fest verbunden.

Die beiden Außensegmente 44,46 sind über einen Tragbolzen 54 miteinander verbunden, welcher im Hohlraum der Welle 4 und durch das Innenteil 48 geführt ist. Der Tragbolzen 54 ist hierbei über Streben 55 jeweils am ersten Außensegment 44 bzw. am zweiten Außensegment 46 befestigt und bildet mit diesen Streben 55 eine Tragvorrichtung 57. Die Tragvorrichtung 57 dient zur Übertragung der Gewichtskraft der Turbinenwelle 8 und des hier nicht dargestellten Turbinenrotors sowie etwaiger hydraulischer Axialkräfte auf das Axiallager 30 des mittleren Lagers 26. Die Tragvorrichtung 57 weist in radialer Richtung eine geringe Steifigkeit auf und ist beispielsweise mit dem ersten und/oder zweiten Außensegment 44,46 federnd verbunden. Dadurch ist vermieden, dass über die Tragvorrichtung 57 radiale Wechselkräfte von der Turbinenwelle 8 auf den Rotor 14A und weiter auf die Generatorwelle 6 übertragen werden. Von der Kupplung 40 sind keine axial wirkenden Kräfte übertragbar. Daher ist die Anordnung der Tragvorrichtung notwendig, um das Gewicht der rotierenden Turbinenteile sowie etwaige hydraulische Axialkräfte auf das Axiallager 30 zu übertragen, um zur axialen Lagerung der rotierenden Teile des Maschinensatzes 2 lediglich das eine Axiallager 30 zu benötigen. Alternativ hierzu kann anstelle der Tragvorrichtung 57 vorgesehen sein, ein zweites Axiallager anzuordnen, welches die rotierenden Teile der Turbine 16 separat abstützt. In diesem Fall entfällt die Notwendigkeit einer Tragvorrichtung 57.

Das mittlere Lager 26 ist wie bei dem herkömmlichen Maschinensatz 2 gemäß FIG 1 zwischen Generatorwelle 6 und Turbinenwelle 8 angeordnet und weist neben dem Axiallager 30 das mittlere Führungslager 28 auf. Der Rotor 14A des Generators 14 wird oben über die Generatorwelle 6 im oberen Führungslager 22 geführt, wobei das obere Führungslager 22 über die obere Tragstruktur 32A abgestützt ist. Zusätzlich wird der Rotor 14A unten durch das mittlere Führungslager 28 geführt, welches auch das erste, mit dem Rotor 14a verbundene Außensegment 44 radial abstützt. Dabei kann das Außensegment 44 als Teil der Generatorwelle 6 auf der Unterseite des Rotors 14A angesehen werden. Beibehalten bleibt bei dem neuen Maschinensatz 2 das untere Führungslager 24, welches in FIG 2 nicht dargestellt ist. Von wesentlicher Bedeutung ist, dass im Unterschied zu dem in FIG 1 dargestellten Maschinensatz 2 ein weiteres Führungslager 56 vorgesehen ist, welches das untere, zweite Außensegment 46 radial lagert und radiale Wechsel kräfte aufnimmt.

Der entscheidende Vorteil des neuen Maschinensatzes 2 gemäß FIG 2 besteht darin, dass die hydraulischen, radialen Wechselkräfte, die auf die Turbinenwelle 8 wirken, über die Kupplung 40 von der Generatorwelle 6 entkoppelt sind. Die Wechselkräfte werden also nicht oder nur in geringem Maße auf die Generatorwelle 6 übertragen. Denn die Kupplung 40 bildet keine starre Verbindung zwischen Turbinenwelle 8 und Generatorwelle 6. Vielmehr wird ein Übertragen der Wechselkräfte dadurch vermieden, dass zwischen dem Innenteil 48 und den beiden Außensegmenten 44,46 über die Zahnverbindung 50 in radialer Richtung jeweils eine Art Gelenkverbindung vorliegt, so dass sich die beiden Außensegmente 44,46 senkrecht zur Längsachse 5 sowohl translatorisch als auch rotatorisch ohne großen Widerstand gegeneinander bewegen können. Es ist also zwischen den beiden Außensegmenten 44,46 sowohl eine Linearverschiebung als auch eine Drehbewegung oder Drehverschiebung möglich. Die von der Turbinenwelle 8 ausgeübten radialen Kräfte und Biegemomente werden daher nicht unmittelbar auf die Generatorwelle 6 übertragen. Für die Entkopplung der Generatorwelle 6 von der Turbinenwelle 8 ist weiterhin das weitere Führungslager 56 wesentlich. Dieses stellt ein stabiles Laufverhalten des Turbinenrotors sicher, indem es die Wechselkräfte im Bereich der Turbinenwelle 8 und insbesondere die auf das zweite Außensegment 46 übertragenen Wechselkräfte aufnimmt und sie über eine weitere Tragstruktur 58 ableitet. Das erste, obere Außensegment 44 wird in radialer Richtung durch das mittlere Führungslager 28 gelagert und dient unter anderem zur Aufnahme von radialen Restkräften, die über die Kupplung 40 übertragen werden.

Da auf die Generatorwelle 6 und auf den Generator 14 nur geringe, vom Generator 14 selbst erzeugte radiale Wechselkräfte ausgeübt werden, können das obere Führungslager 22 und der Generator 14 konstruktiv einfacher und damit kostengünstiger als bei-einem herkömmlichen Maschinensatz ausgestaltet werden. Dies gilt ebenso für den Schacht 18 im Bereich des Generators und des oberen Führungslagers 22, da die Kräfte auf den Schacht 18 übertragen werden.

Ein weiterer wesentlicher Vorteil der Kupplung 40 liegt darin, dass weiterhin ein Übertragen von Biegemomenten reduziert oder unterbunden ist. Die Generatorwelle 6 kann daher zur Turbinenwelle 8 einen Winkel einschließen, ohne dass durch die nichtfluchtende Ausrichtung der beiden Wellen 6,8 ein zu großes Biegemoment auf die beiden Wellen 6,8 ausgeübt wird. Es sind also ohne weiteres geringfügige Abweichungen der beiden Wellen 6,8 aus der fluchtenden Ausrichtung möglich, ohne dass die Funktionsfähigkeit beeinträchtigt ist. Dies wird im Wesentlichen durch die Gelenkwirkung der Zahnverbindung 50 bewirkt.

## Patentansprüche

1. Wasserkraftmaschinensatz mit vertikal angeordneter Welle, umfassend:
eine Turbine (16) mit einer Turbinenwelle (8);
einen Generator (14) mit einer Generatorwelle (6), wobei
die Turbinenwelle (8) mit der Generatorwelle (6) in Richtung einer Längsachse (5) verbunden ist und
zwischen Turbinenwelle (8) und Generatorwelle (6) eine permanent wirksame Kupplung (40) vorgesehen ist, **dadurch gekennzeichnet, daß**
die permanent wirksame Kupplung (40) eine Beweglichkeit der beiden Wellen (6,8) gegeneinander senkrecht zur Längsachse (5) ermöglicht, wobei
die Kupplung (40) als Doppelzahnkupplung mit einem Innenteil (48) und mit einem Außenteil (42) ausgeführt ist und
das Außenteil (42) ein mit der Generatorwelle (6) verbundenes erstes Außensegment (44) und ein mit der Turbinenwelle (8) verbundenes zweites Außensegment (46) aufweist und
die beiden Außensegmente (44, 46) in Richtung der Längsachse (5) über eine Tragvorrichtung (57) miteinander verbunden sind.

2. Maschinensatz (2) nach Anspruch 1, **dadurch gekennzeichnet, dass** die Turbinenwelle (8) im Bereich der Kupplung (40) von einem radialen Führungslager (56) geführt ist.

3. Maschinensatz (2) nach Anspruch 1 oder 2, **dadurch gekennzeichnet, dass** die Kupplung (40) als Bogenzahnkupplung, ausgeführt ist.

4. Maschinensatz (2) nach einem der Ansprüche 1 bis 3, **dadurch gekennzeichnet, dass** die Tragvorrichtung (57) eine geringe Steifigkeit in senkrechter Richtung zur Längsachse (5) aufweist.

5. Maschinensatz (2) nach Anspruch 4, **dadurch gekennzeichnet, dass** die Tragvorrichtung (57) mit dem ersten und/oder mit dem zweiten Außensegment (44,46) federnd verbunden ist.

6. Maschinensatz (2) nach einem der vorhergehenden Ansprüche, **dadurch gekennzeichnet, dass** die Generatorwelle (6) im Bereich der Kupplung (40) von einem mittleren radialen Führungslager (28) geführt ist.

7. Maschinensatz (2) nach Anspruch 6, **dadurch gekennzeichnet, dass** das mittlere Führungslager (28) in einem mittleren Lager (26) angeordnet ist, weiches als kombiniertes Trag-Führungslager zur Aufnahme sowohl axialer als auch radialer Kräfte ausgebildet ist

8. Maschinensatz(2) nach einem der vorhergehenden Ansprüche, **dadurch gekennzeichnet, dass** die Kupplung (40) eine Winkelnachgiebigkeit aufweist, so dass die Übertragung von Biegemomenten von der Turbinenwelle (8) auf die Generatorwelle (6) weitgehend vermieden ist.

## Claims

1. A hydro-electric set with a vertically arranged shaft, comprising a turbine (16) with a turbine shaft (8); a generator (14) with a generator shaft (6), with the turbine shaft (8) being joined to the generator shaft (6) in the direction of a longitudinal axis (5), and a permanently acting coupling (40) being provided between turbine shaft (8) and generator shaft (6), **characterized in that** the permanently acting coupling (40) allows a mobility of the two shafts (6, 8) relative to each other perpendicular to the longitudinal axis, with the coupling (40) being configured as a double gear coupling with an inside part (48) and an outside part (42), and the outside part (42) comprises a first outside segment (44) which is connected with the generator shaft (6) and a second outside segment (46) which is connected with the turbine shaft (8), and the two outside segments (44, 46) are mutually connected in the direction of the longitudinal axis (5) via a supporting apparatus (57).

2. A machine set (2) according to claim 1, **characterized in that** the turbine shaft (8) is guided in the region of the coupling (40) by a radial guide bearing (56).

3. A machine set (2) according to claim 1 or 2, **characterized in that** the coupling (40) is arranged as a curved-tooth coupling.

4. A machine set (2) according to one of the claims 1 to 3, **characterized in that** the supporting apparatus (57) has a low stiffness in the perpendicular direction to the longitudinal axis (5).

5. A machine set (2) according to claim 4, **characterized in that** the supporting apparatus (57) is resiliently connected with the first and/or second outside segment (44, 46).

6. A machine set (2) according to one of the preceding claims, **characterized in that** the generator shaft (6) is guided in the region of the coupling (40) by a middle radial guide bearing (28).

7. A machine set (2) according to claim 6, **characterized in that** the middle guide bearing (28) is arranged in a middle bearing (26) which is arranged as a combined supporting guide bearing for receiving both axial as well as radial forces.

8. A machine set (2) according to one of the preceding claims, **characterized in that** the coupling (40) has an angular flexibility, so that the transmission of flexural torques from the turbine shaft (8) to the generator shaft (6) is substantially prevented.

## Revendications

1. Groupe moteur hydraulique avec arbre vertical comprenant:
une turbine (16) avec un arbre de turbine (8);
un générateur (14) avec un arbre de générateur (6),
l'arbre de turbine (8) étant relié à l'arbre de générateur (6) suivant un axe longitudinal (5) et
un accouplement (40) permanent étant prévu entre l'arbre de turbine (8) et l'arbre de générateur (6), **caractérisé en ce que**
l'accouplement (40) permanent autorise le mouvement relatif, perpendiculaire à l'axe longitudinal (5), entre les deux arbres (6, 8), l'accouplement (40) étant conformé en forme d'accouplement à double denture avec une partie interne (48) et une partie externe (42) et
la partie externe (42) comportant un premier segment externe (44) relié à l'arbre de générateur (6) et un deuxième segment externe (46) relié à l'arbre de turbine (8) et
les deux segments externes (44, 46) étant reliés suivant l'axe longitudinal (5) par un dispositif porteur (57).

2. Groupe moteur (2) selon la revendication 1, **caractérisé en ce que**, à la hauteur de l'accouplement (40), l'arbre de turbine (8) est guidé par un palier de guidage radial (56).

3. Groupe moteur (2) selon la revendication 1 ou 2, **caractérisé en ce que** l'accouplement (40) est conformé en forme d'accouplement à denture bombée.

4. Groupe moteur (2) selon l'une quelconque des revendications 1 à 3, **caractérisé en ce que** le dispositif porteur (57) présente une faible rigidité perpendiculairement à l'axe longitudinal (5).

5. Groupe moteur (2) selon la revendication 4, **caractérisé en ce que** le dispositif porteur (57) est relié élastiquement au premier et/ou au deuxième segment externe (44, 46).

6. Groupe moteur (2) selon l'une quelconque des revendications précédentes, **caractérisé en ce que**, à la hauteur de l'accouplement (40), l'arbre de générateur (6) est guidé par un palier de guidage radial (28) central.

7. Groupe moteur (2) selon la revendication 6, **caractérisé en ce que** le palier de guidage central (28) est disposé dans un palier central (26) conformé de manière à faire office à la fois de palier de guidage et de portée et destiné à absorber les efforts tant axiaux que radiaux.

8. Groupe moteur (2) selon l'une quelconque des revendications précédentes, **caractérisé en ce que** l'accouplement (40) présente une flexibilité angulaire permettant d'éviter dans une large mesure la transmission de moments fléchissants de l'arbre de turbine (8) à l'arbre de générateur (6).
